# EUROPÄISCHE PATENTSCHRIFT

(11) **EP 1 362 671 B1**
(45) Veröffentlichungstag und Bekanntmachung des Hinweises auf die Patenterteilung: **03.11.2004**
(21) Anmeldenummer: 03002946.6
(22) Anmeldetag: 11.02.2003
(51) Int. Cl.: B24D 3/18, B24D 18/00

(54) **Verfahren zur Herstellung frei gesinterter ringförmiger Schleifbeläge für Schleifscheiben**
Method for the production of free-sintered ring-shaped abrasive lining for grinding wheels
Procédé de production de revêtement abrasif librement fritté de forme annulaire pour disques de meulage

(30) Priorität: 15.05.2002 DE 10221483
(43) Veröffentlichungstag der Anmeldung: 19.11.2003
(73) Patentinhaber: SAINT-GOBAIN Diamantwerkzeuge GmbH & Co. KG, 22844 Norderstedt (DE)
(72) Erfinder: Steckel, Gunter, Dipl.-Ing., 24588 Henstedt-Ulzburg (DE)
(74) Vertreter: Patentanwälte Hauck, Graalfs, Wehnert, Döring, Siemons, Schildberg

(56) Entgegenhaltungen:
- WO-A-98/21009
- US-A- 5 474 741

## Beschreibung

Die Erfindung bezieht sich auf ein Verfahren zur Herstellung frei gesinterter ringförmiger Schleifbeläge für Schleifscheiben, bei denen Diamantund/oder CBN-Schleifkörner als Schleifmittel verwendet werden.

Ein Verfahren mit den Merkmalen des Oberbegriffs des Anspruchs 1 ist aus der WO 98/21009A bekannt.

Häufig besteht die Anforderung bei der schleiftechnischen Bearbeitung von Werkstücken eine geringe Schnitt- und/oder Bearbeitungsbreite einzuhalten von beispielsweise bis 0,5 mm. Häufig sind Nuten in diesem Größenbereich zu schleifen. Diese Schleifaufgabe wird z.B. mit Schleifscheiben gelöst, bei denen der Schleifbelag ein dichter porenfreier Ring ist, in dem die Schleifkömer in Metall- oder Kunststoffharzbindungen gehalten sind. In der Regel ist der Durchmesser derartiger Schleifbelagringe ein Vielfaches ihrer Breite und der Dicke.

Es ist bekannt, derartige Schleifbelagringe in einem Presssintervorgang oder durch Spritzguss nach einem vorgegebenen Zeittemperaturverlauf in entsprechenden Formen zu fertigen. Das Verfahren und das verwendete Material gewährleisten die gewünschte geometrische Stabilität des Schleifringes.

Es ist ferner bekannt, dünne Trennscheiben durch Pressen herzustellen, die jedoch nicht als Ring, sondern immer als voll mit Schleifmittel und Bindung durchsetzte Scheiben gefertigt werden, bei denen häufig Fasermatten zur Stabilisierung der mechanischen Festigkeit eingesetzt werden.

Bei Schleifkörpern, die poröse Strukturen besitzen, kann als Fertigungsverfahren nur das so genannte freie Sintern eines kaltgepressten Formlings verwendet werden. Die gewünschte Werkstoffstruktur erfolgt durch Ausbrennen von Stoffen, welche eine für die Schleifanwendung wünschenswerte Porosität hinterlassen. Durch diese sich bei der freien Sinterung ausbildende Porosität entsteht ein stofflicher Zustand höherer innerer Energie. Der energetisch höhere, allerdings ungünstige Zustand wird durch Volumenverkleinerung kompensiert (Schwindung). Die Volumenabnahme führt in vielen Fällen zu Spannungszuständen, insbesondere bei sehr dünnen Ringen. Es kommt zu Deformationen und im Falle der Überschreitung des kritischen Spannungszustands zum Reißen des keramischen Materials beim Abkühlen.

Der beschriebene Schwindungsvorgang beim freien Sintern ist ein unerwünschter, jedoch nicht zu vermeidender physikalisch/chemischer Vorgang bei pyrolytischen Prozessen (Brennen) zur Herstellung poröser keramischer Schleifwerkstoffe.

Der Erfindung liegt die Aufgabe zugrunde, ein Verfahren zur Herstellung frei gesinterter ringförmiger Schleifbeläge für Schleifscheiben anzugeben, das auch bei dünnwandigen Schleifringen schwindungs- und damit spannungsarm verläuft.

Diese Aufgabe wird durch die Merkmale des Patentanspruchs 1 gelöst.

Bei dem Verfahren nach der Erfindung werden Stützbeläge eingesetzt. Vor dem Sinterprozess wird ein ringförmiger Formling durch Kaltpressen hergestellt. Er setzt sich aus drei Schichten zusammen, nämlich einer mittleren Schicht, welche das Material für den Schleifbelag enthält und zwei äußeren Schichten, welche das Material für den Stützbelag enthalten. Das körnige Material für den Stützbelag bildet eine Stützkeramik aus, die eine ausreichende Stabilität aufweist, sodass beim Abkühlen des Schleifbelags ein Schwinden weitgehend unterbunden wird. Die Stützkeramik hat darüber hinaus die Eigenschaft, gut schleifbar zu sein. Nach dem freien Sintern wird der Pressling auf die gewünschte geometrische Form hin geschliffen. Insbesondere wird die Stützkeramik durch Schleifen entfernt.

Bei dem erfindungsgemäßen Verfahren wird die als Stützbelag füngierende Keramik so gewählt, dass sie eine ausreichende Stabilisierung der porösen Schleifkeramik während des Brennprozesses (im Temperaturbereich von 750 bis 1.000°C) gewährleistet und dem Verzug entgegenwirkt, ohne dass kritische Spannungen an den Grenzflächen Stütz-/Schleifkeramik und innerhalb des Schleifringes hervorgerufen werden. Die Zusammensetzung der Stützkeramik kann so eingestellt werden, dass ein relativ breites Spezifikationsspektrum poröser Schleifkeramiken hergestellt werden kann, wodurch sie die bei schleiftechnischen Anwendungen notwendigen fein- oder grobkörnigen Spezifikationen (Komgrößenbereich des Schleifmittels 15 bis 150µm) gewährleistet.

Nach einer Ausgestaltung der Erfindung besitzt die Stützkeramik ein Kornspektrum von 0,1 bis 100µm, vorzugsweise 0,1 bis 20µm.

Nach einer anderen Ausgestaltung der Erfindung enthält die Stützkeramik ein glasiges Bindemittel, vorzugsweise 10 bis 20 Ma%.

Für die Verwendung als Stützkeramik bieten sich verschiedene Keramiken an. Besonders vorteilhaft ist die Verwendung von Mullit oder Korund. Hiervon enthält die Stützkeramik vorzugsweise 80 bis 90 Ma%. Korund ist bekanntlich ein α-Aluminiumoxid und Mullit ein synthetisches kristallines Aluminiumsilikat, welches beim Brennen von hochtonerdigen und quarzreichen Erzeugnissen entsteht (z.B. kristalline Phase in Porzellan, Schamotte). Wird sowohl Mullit als auch Korund eingesetzt, enthält die Stützkeramik nach einer weiteren Ausgestaltung der Erfindung 30 bis 50 Ma% beider Stoffe.

Die Eigenporosität der Stützkeramik soll relativ niedrig sein. Daher sieht eine anderen Ausgestaltung der Erfindung vor, dass die Stützkeramik eine Eigenporosität von <15% besitzt.

Aus naturgemäß einleuchtenden Gründen ist die Eigenschwindung der Stützkeramik möglichst klein. Sie liegt nach einer Ausgestaltung der Erfindung bei maximal 0,25% linear.

Es versteht sich, dass die Schwindung in Achsrichtung bei der Herstellung der ringförmigen Schleifbeläge durch das erfindungsgemäße Verfahren nicht unterbunden werden kann. Durch ein entsprechendes Aufmaß bei der Herstellung des Pressformlings kann das gewünschte axiale Maß erhalten werden. Bei dem erfindungsgemäßen Verfahren wird insbesondere eine ausreichende Rundheit des ringförmigen Schleifbelags erhalten bei einem Minimum von inhärenten Spannungen.

Für die Durchführung des erfindungsgemäßen Verfahrens wird eine Pressform verwendet, in welche zunächst die erste Schicht eines Stützbelages eingefüllt und vorverdichtet wird. Anschließend wird das Material für den Schleifbelag eingefüllt und vorverdichtet. Schließlich wird die zweite Schicht für den Stützbelag eingefüllt und ein Gesamtpressdruck erzeugt, der für die Herstellung des Formlings erforderlich ist. Danach wird der so erzeugte Formling gebrannt und auf einen geeigneten Träger aufgebracht und dort z.B. durch Kleben befestigt. Anschließend erfolgt das Schleifen des gebrannten Formlings, wodurch der Stützbelag entfernt und der Schleifbelag auf die erforderliche Geometrie gebracht wird.

## Patentansprüche

1. Verfahren zur Herstellung frei gesinterter ringförmiger Schleifbeläge für Schleifscheiben, bei denen Diamant- und/oder CBN-Schleifkörner keramisch gebunden sind, **dadurch gekennzeichnet, dass** ein kaltgepresster ringförmiger Formling aus drei Schichten hergestellt wird, von denen die mittlere Schicht das körnige Material für den Schleifbelag enthält und die beiden äußeren Schichten das körnige Material für einen Stützbelag enthalten, der von einer Keramik gebildet ist, die im Bereich der Brenntemperatur des Schleifbelags eine ausreichende Stabilität aufweist, die einem Verzug des Schleifbelags beim Abkühlen entgegenwirkt und der gut schleifbar ist, der ringförmige Formling anschließend frei gesintert und danach die Stützkeramik abgeschliffen wird.

2. Verfahren nach Anspruch 1, **dadurch gekennzeichnet, dass** die Stützkeramik ein Kornspektrum von 0,1 bis 100µm besitzt, vorzugsweise von 0,1 bis 20µm.

3. Verfahren nach Anspruch 1 oder 2, **dadurch gekennzeichnet, dass** die Stützkeramik ein glasiges Bindemittel enthält, vorzugsweise 10 bis 20 Ma%.

4. Verfahren nach einem der Ansprüche 1 bis 3, **dadurch gekennzeichnet, dass** die Stützkeramik Mullit und/oder Korund enthält, vorzugsweise 80 bis 90 Ma%.

5. Verfahren nach Anspruch 4, **dadurch gekennzeichnet, dass** bei Verwendung von Mullit und Korund die Stützkeramik 30 bis 50 Ma% beider Stoffe enthält.

6. Verfahren nach einem der Ansprüche 1 bis 5, **dadurch gekennzeichnet, dass** die Stützkeramik eine Eigenporosität von <15% besitzt.

7. Verfahren nach einem der Ansprüche 1 bis 6, **dadurch gekennzeichnet, dass** die Stützkeramik im Temperaturbereich von 700 bis 1000°C Formstabilität aufweist.

8. Verfahren nach einem der Ansprüche 1 bis 7, **dadurch gekennzeichnet, dass** die Stützkeramik eine Eigenschwindung von maximal 0,25% linear besitzt.

9. Verfahren nach einem der Ansprüche 1 bis 8, **gekennzeichnet durch** seine Anwendung auf einen Korngrößenbereich des Schleifmittels von 15 bis 150µm.

10. Verfahren nach einem der Ansprüche 1 bis 9, **gekennzeichnet durch** folgende Herstellungsschritte:
- das körnige Material für eine erste Schicht des Stützbelags wird in eine Pressform gefüllt und vorverdichtet
- das körnige Material für den Schleifbelag wird auf die erste Schicht eingefüllt und vorverdichtet
- das körnige Material für den zweiten Stützbelag wird auf die Schleifbelagschicht eingefüllt und es erfolgt eine Endverdichtung aller Schichten zum kaltverdichteten Formling
- der Formling wird gebrannt und
- die Geometrie des Schleifbelags wird **durch** Schleifen auf einem Schleifbelagträger hergestellt.

## Claims

1. A method for the production of freely sintered, ring-shaped abrasive linings for grinding wheels in which diamond and/or CBN abrasive grains are ceramically bonded, **characterized in that** a cold-compressed, ring-shaped formed body is manufactured from three layers the middle layer of which contains the grained material for the abrasive lining while the two outer layers contain the grained material for a supporting overlay which is formed by a ceramic compound which is of a sufficient stability in the range of the baking temperature of the abrasive lining that counteracts a distortion of the abrasive lining while being cooled, and which can be ground well; the ring-shaped formed body is freely sintered subsequently, and the supporting ceramic compound is ground off afterwards.

2. The method according to claim 1, **characterized in that** the supporting ceramic compound has a grain size ranging from 0.1 to 100µm, preferably from 0.1 to 20µm.

3. The method according to claim 1 or 2, **characterized in that** the supporting ceramic compound contains a glassy bonding material preferably ranging from 10 to 20 % by weight.

4. The method according to any one of claims 1 to 3, **characterized in that** the supporting ceramic compound contains mullite and/or corundum preferably ranging from 80 to 90 % by weight.

5. The method according to claim 4, **characterized in that** if mullite and corundum are used the supporting ceramic compound contains from 30 to 50 % by weight of either substance.

6. The method according to any one of claims 1 to 5, **characterized in that** the supporting ceramic compound has an inherent porosity <15%.

7. The method according to any one of claims 1 to 6, **characterized in that** the supporting ceramic compound is of a dimensional stability within the temperature range of from 700 to 1,000°C.

8. The method according to any one of claims 1 to 7, **characterized in that** the supporting ceramic compound has a linear inherent shrinkage of 0.25 %, as a maximum.

9. The method according to any one of claims 1 to 8, **characterized by** its application to a abrasive grain size range of from 15 to 150µm.

10. The method according to any one of claims 1 to 9, **characterized by** the manufacturing steps of
- Filling the grained material for a first layer of the supporting overlay into a compression mould and subjecting it to pre-compaction
- Filling the grained material for the abrasive lining onto the first layer and subjecting it to pre-compaction
- Filling the grained material for the second supporting overlay onto 0the abrasive lining layer and finally compacting all layers to form the cold-compacted formed body.
- Baking the formed body, and
- Establishing the geometry of the abrasive lining by grinding on an abrasive lining substrate.

## Revendications

1. Procédé de fabrication de garnitures abrasives annulaires frittées librement pour meules, dans lesquelles des grains abrasifs de diamant et/ou de CBN sont liés dans une céramique, **caractérisé en ce qu'**on fabrique une ébauche annulaire constituée de trois couches par pressage à froid, dont la couche du milieu contient le matériau granulaire pour la garniture abrasive et les deux autres couches contiennent le matériau granulaire pour former une couche de support, qui est constituée d'une céramique présentant une stabilité suffisante dans la plage de températures de cuisson de la garniture abrasive et agissant contre un étirage de la garniture abrasive lors du refroidissement, la couche de support étant bien abrasable, on fritte ensuite librement l'ébauche annulaire, puis on abrase la céramique de support.

2. Procédé selon la revendication 1, **caractérisé en ce que** la céramique de support a une granulométrie de 0,1 à 100 µm, de préférence de 0,1 à 20 µm.

3. Procédé selon la revendication 1 ou 2, **caractérisé en ce que** la céramique de support contient un agent liant vitreux, de préférence de 10 à 20 % en masse.

4. Procédé selon une des revendications de 1 à 3, **caractérisé en ce que** la céramique de support contient de la mullite et/ou du corindon, de préférence de 80 à 90 % en masse.

5. Procédé selon la revendication 4, **caractérisé en ce qu'**en utilisant de la mullite et du corindon, la céramique de support contient 30 à 50 % en masse des deux matières.

6. Procédé selon une des revendications 1 à 5, **caractérisé en ce que** la céramique de support possède une porosité propre < 15 %.

7. Procédé selon une des revendications 1 à 6, **caractérisé en ce que** la céramique de support offre une stabilité au moulage dans une gamme de températures de 700 à 1000°C.

8. Procédé selon une des revendications 1 à 7, **caractérisé en ce que** la céramique de support présente un retrait propre d'au maximum 0,25 % en linéaire.

9. Procédé selon une des revendications 1 à 8, **caractérisé par** son utilisation dans une plage granulométrique de l'agent abrasif de 15 à 150 µm.

10. Procédé selon une des revendications 1 à 9, **caractérisé par** les étapes de fabrication suivantes :
- le matériau granulaire est introduit dans un moule pour former une première couche de la couche de support et il est précompacté,
- le matériau granulaire destiné à la garniture abrasive est versé sur la première couche et précompacté,
- le matériau granulaire pour la seconde couche de support est versé sur la couche de garniture abrasive et une compression finale de toutes les couches est effectuée pour former l'ébauche pressée à froid,
- l'ébauche est passée en cuisson et
- la géométrie de la garniture abrasive est fabriquée par abrasion sur un support de garniture abrasive.
